Europäisches Patentamt

European Patent Office

Office européen des brevets

(11) Veröffentlichungsnummer: **0 139 109**
**B1**

(12) EUROPÄISCHE PATENTSCHRIFT

(45) Veröffentlichungstag der Patentschrift: **26.09.90**

(51) Int. Cl.⁵: **G 01 S 13/78**

(21) Anmeldenummer: **84108519.4**

(22) Anmeldetag: **19.07.84**

(54) **Einrichtung zum Ermitteln von Laufzeitschwankungen.**

(30) Priorität: **29.07.83 DE 3327339**

(43) Veröffentlichungstag der Anmeldung:
**02.05.85 Patentblatt 85/18**

(45) Bekanntmachung des Hinweises auf die
Patenterteilung:
**26.09.90 Patentblatt 90/39**

(84) Benannte Vertragsstaaten:
**DE FR GB**

(56) Entgegenhaltungen:
**EP-A-0 098 160
EP-A-0 119 711
DE-B-1 929 042
DE-B-2 413 995
US-A-3 513 470**

(73) Patentinhaber: **ALCATEL N.V.**
**Strawinskylaan 537 (World Trade Center)**
**NL-1077 XX Amsterdam (NL)**
(84) **FR GB**

(73) Patentinhaber: **Standard Elektrik Lorenz**
**Aktiengesellschaft**
**Hellmuth-Hirth-Strasse 42**
**D-7000 Stuttgart 40 (DE)**
(84) **DE**

(72) Erfinder: **Becker, Klaus**
**Niersteiner Strasse 41**
**D-7000 Stuttgart 31 (DE)**
Erfinder: **Müller, Albrecht**
**Mauchweg 16**
**D-7000 Stuttgart 40 (DE)**

(74) Vertreter: **Schmidt, Werner, Dipl.-Phys. et al**
**Standard Elektrik Lorenz AG Patent- und**
**Lizenzwesen Postfach 30 09 29**
**D-7000 Stuttgart 30 (DE)**

Courier Press, Leamington Spa, England.

**Beschreibung**

Die Erfindung geht aus von einem Abfrage- und einem Antwortgelost wie in der DE—B—2 413 995 angegeben.

In dieser Auslegeschrift sind diese Geräte im Zusammehang mit einem -Auftrage/Antwortsystem zur Bestimmung der Entfernung zwischen zwei Stationen beschrieben.

Bei den von dort bekannten Geräten können gerätebedingte Laufzeitschwankungen ermittelt werden. Verursacht werden solche Schwankungen beispielsweise durch Alterung der verwendeten Bauelemente oder durch Temperaturschwankungen.

Nicht erfaßt werden Laufzeichschwankungen, die beispielsweise dadurch bedingt sind, daß nacheinander empfangene Signale, unterschiedliche Signalparameter haben. Ein solcher Signalparameter ist beispielsweise die Signalamplitude.

Befindet sich am Anfang des Signalpfads ein Empfänger, dann ist die Laufzeit des Nutzsignals durch der Empfänger abhängig von seiner Amplitude.

Aufgabe der Erfindung ist es, ein ein Antwortgerät und ein Abfragegerät anzugeben, die so ausgestaltet sind daß auch Variationen der Signalparameter von nacheinander empfangenen Signalen berücksietigt werden.

Die Lösung dieser Ausgabe erfolgt mit den im Anspruch 1 bzw. 2 angegebenen Mitteln.

Mit den neuen Geräten werden auch solche Laufzeitschwankungen ermittelt, die dadurch verursacht werden, daß Signale, die nacheinander den Signalpfad durchlaufen, unterschiedliche Werte für mindestens einen Signalparameter, aufweisen. Bei den Signalparametern ist insbesondere an die Amplitude und an die Frequenz der Signale zu denken; bei impulsförmigen Signalen neben der Amplitude an die Frequenz der Trägerschwingung und an die Breite sowie die Anstiegszeit der Impulse.

Besonders gut eignen sich das Abfrage- und das Antwortgerät für das DME-Zweiwegentfernungsmeßsystems einsetzen.

Im Transponder deur Antwortgerät ist es für die Entfernungsmeßgenauigkeit von großer Bedeutung, daß das Antwortsignal exakt 50 μs nach Empfang eines Abfragesignals abgestrahlt wird und es kommt weiterhin häufig vor, daß nacheinander ankommende Abfragesignale voneinander stark unterschiedliche Amplituden aufweisen. Das Steuersignal wird hier dazu verwendet, die Verzögerung auf den gewünschten Wert einzustellen.

Im Abfragegerät muß die Zeitspanne zwischen der Abstrahlung eines Abfragesignals und dem Empfang eines Antwortsignals genau gemessen werden. Hierbei sind geräteinterne Laufzeiten zu berücksichtigen. Das Steuersignal wird hier dazu ausgenutzt, außer der geräteinternen Laufzeiten auch Schwankungen dieser Laufzeiten bei der Auswertung zu berücksichtigen.

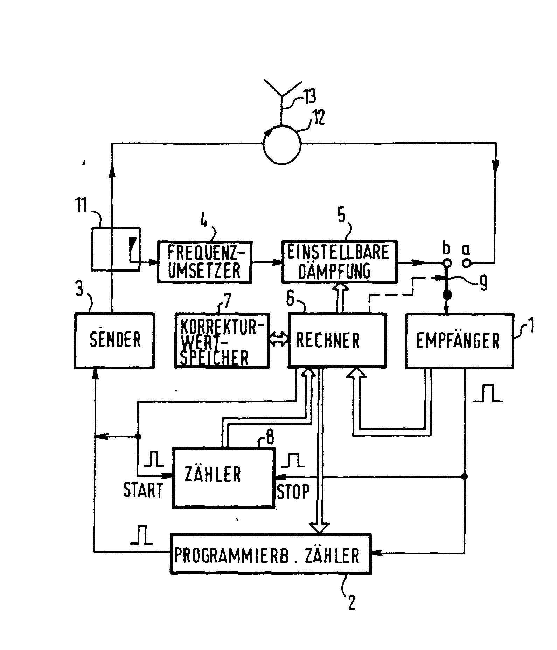

Die Erfindung wird anhand der einzigen Figur, die ein Blockschaltbild der neuen Einrichtung ist, beispielsweise näher erläutert.

Bei dem Ausführungsbeispiel wird davon ausgegangen, daß als Signalparameter nur die Signalamplitude berücksichtigt werden soll. Folglich wird auch nur die Amplitude des Signals gemessen. Sollen andere Parameter (anstelle der oder zusätzlich zur Amplitude) berücksichtigt werden, dann ist es lediglich notwendig, geeignete Einrichtungen zur Messung der Werte für diese Parameter vorzusehen. Wie dies zu realisieren ist, ist nach Kenntnis der nachfolgend beschriebenen Lösung fachmännisches Wissen.

Die Erfindung wird im Zusammenhang mit einem Transponder für das DME-Zweiwegentfernungsmeßsystem beschrieben. In der Zeichnung sind von dem Transponder nur die zum Verständnis der Erfindung wesentlichen Teile des Transponders dargestellt. Bei dem DME-Entfernungsmeßsystem wird von einer Antenne 13 ein Abfragesignal empfangen und dieses gelangt über einen Zirkulator 12 zu einem Signalpfad. In dem Signalpfad sind hintereinander ein Schalter 9, ein Empfänger 1, ein als steuerbare Verzögerungsschaltung verwendeter programmierbarer Zähler 2, ein Sender 3, und ein Richtkoppler 11 vorhanden. Der Richtkoppler 11 ist wieder mit dem Zirkulator 12 verbunden. Zur Erzielung einer hohen Entfernungsmeßgenauigkeit bei einem DME-Entfernungsmeßsystem ist es wichtig, daß die Zeit zwischen dem Empfang des Abfragesignals und der Abstrahlung des Antwortsignals genau 50 μs ist. Die exakte Einstellung der Verzögerung erfolgt mit dem programmierbaren Zähler, der bis zu einem solchen Zählerstand zählt, daß die resultierende Verzögerung zwischen Empfang des Abfragesignals und Abstrahlung des Antwortsignals unter Berücksichtigung der geräteinternen Laufzeit exakt 50 μs ist.

Der Empfänger 1 erzeugt einen Triggerimpuls für dem programmierbaren Zähler 2 und der programmierbare Zähler 2 erzeugt nach Erreichen des vorgegebenen Zählerstandes einen Triggerimpuls für den Sender 3. Dies ist an sich bekannt und die dazu notwendigen Einrichtungen werden deshalb nicht näher erläutert.

Die Verzögerung hängt unter anderem von gerätebedingten Schwenkungen (Temperatur- und Alterungseffekte) und weiterhin von Schwenkungen der Werte für bestimmte Signalparameter des empfangenen Signals ab. Es wurde bereits erwähnt, daß für die weitere Beschreibung die Signalamplitude als der Signalparameter berücksichtigt wird, dessen Wert schwankt.

Zur Ermittlung der Schwankungen, die eine Abweichung der Verzögerung von dem Sollwert 50 μs bewirken, sind Eichsignale vorgesehen. Zur Erzeugung eines Eichsignals wird in dem Richtkoppler 11 ein Teil des von dem Sender 3 abgegebenen Signals ausgekoppelt und zu einem Frequenzumsetzer 4 geleitet. Der Frequenzumsetzer 4 ist bei einem Transponder für das DME-Entfernungsmeßsystem deshalb notwendig, weil die Frequenz des Abfragesignals einen unterschiedlichen Wert als die Frequenz des Antwortsignals aufweist. Der Frequenzumsetzer setzt die Frequenz des vom Sender 3 abgegebenen Antwortsignals auf die Frequenz des dem Empfänger 1 zugeführten Abfragesignals um. Dem Frequenzumsetzer 4 nachgeschaltet ist eine Dämpfungseinrichtung, deren Dämpfung einstellbar ist. Die Einstellung der Dämpfung erfolgt von einer Steuereinrichtung 6 aus, die bei dem Ausführungsbeispiel als Rechner realisiert ist. Das Ausgangssignal der Dämpfungsschaltung 5 wird wie das Abfragesignal dem Schalter 9 zugeführt. Der Schalter 9 wird von dem Rechner 6 so gesteuert, daß er in seiner einen Shalterstellung a das Abfragesignal zu dem Empfänger 1 durchschaltet und in seiner anderen Stellung b das Ausgangssignal der Dämpfungsschaltung zu dem Empfänger 1 durchschaltet. Der Rechner 6 steuert die Dämpfungsschaltung 5 so, daß die Eichsignale unterschiedliche Amplituden aufweisen. Die Größe der angewandten Amplitudenstufen bestimmt die Genauigkeit der Eichung. Für das Ausführungsbeispiel sind Stufen von 10 dB gewählt. Während des Eichbetriebs gelangt jetzt also nicht das Abfragesignal zum Empfänger 1, sondern das Eichsignal. Das von dem Empfänger abgegebene Triggersignal stoppt jetzt nicht nur den programmierbaren Zähler 2, sondern auch einen weiteren Zähler 8. Gestartet wurde der Zähler 8 durch ein von dem Rechner 6 abgegebenes Triggersignal, das außerdem dem Sender 3 zugeführt wurde. Dieses Triggersignal wird entweder in regelmäßigen Abständen von ungefähr 50 ms gegeben oder jeweils eine bestimmte Zeit nach Empfang eines Abfragesignals. Der Zähler 8 mißt somit die Laufzeit des Eichsignals durch Sender, Richtkoppler, Frequenzumsetzer, Dämpfungsschaltung, Schalter, Empfänger. Dieser gemessene Wert wird zu dem Rechner 6 geleitet und dort mit dem Sollwert verglichen. Abhängig von dem Vergleich des gemessenen Wertes mit dem Sollwert wird ein Steuersignal für den programmierbaren Zähler erzeugt, das jeweils dem Wert der Amplitude des gerade verwendeten Eichsignals zugeordnet ist. Die Daten für das Steuersignal werden in einem Korrektürwertspeicher 7 gespeichert. Der Rechner 6 steuert die Dämpfungsschaltung jeweils so, daß nacheinander Eichsignale mit unterschiedlichen Amplituden erzeugt werden. Damit erhält man für jeden Amplitudenwert das diesem Amplitudenwert zugeordnete Steuersignal.

Um nun zu erreichen, daß dem jeweils empfangenen Abfragesignal das richtige Steuersignal zugeordnet wird, wird in dem Empfänger 1 die Amplitude des gerade empfangenen Abfragesignals gemessen und der Amplitudenwert wird dem Rechner 6 zugeführt. Daraufhin wählt der Rechner 6 aus dem Korrekturwertspeicher 7 das der Amplitude des empfangenen Abfragesignals zugeordnete Steuersignal aus und führt dies dem programmierbaren Zähler 2 zu. Dadurch wird erreicht, daß nicht nur geräteabhängige Schwankungen kompensiert werden, sondern daß auch Schwankungen kompensiert werden, die dadurch verursacht werden, daß die Abfragesignale unterschiedliche Amplituden aufweisen. Die Abfragesignale weisen deshalb sehr starke Amplitudenschwankungen auf, da nacheinander Abfragesignale von unterschiedlich weit entfernten Abfragegeräten abgestrahlt und von dem Transponder empfangen werden. Nachfolgend werden noch beispielsweise einige Modifikationen des Ausführungsbeispiels angegeben. Anstelle den Zähler 8 mit dem vom Empfänger 1 abgegebenen Triggersignal zu stoppen, ist es auch möglich, den Zähler 8 mit dem Ausgangssignal des programmierbaren Zählers 2 zu stoppen. Es ist nicht notwendig für den Zähler 8 und den programmierbaren Zähler 2 zwei unterschiedliche Beuelemente zu verwenden, sondern es ist auch möglich, einen Zähler vorzusehen, der die Aufgaben der beiden Zähler 8 und 2 wahrnimmt.

Bei Inbetriebnahme des Transponders ist eine bestimmte Zeit notwendig, bis man für alle in Frage kommenden Werte für die Amplitude ein Steuersignal erhalten hat. Hat man einmal die Steuersignale für alle die in Frage kommenden Amplitudenwerte ermittelt, dann ist es möglich, die Eichung nur noch in größeren Zeitabständen durchzuführen.

Die neue Einrichtung wurde für einen Transponder beschrieben. Für ein Abfragegerät ist sie sinngemäß anzuwenden. Im Gegensatz zum Transponder wird beim Abfragegerät des Steuersignal nicht dazu verwendet, eine konstante Verzögerung einzustellen, sondern es wird bei der Ermittlung der Entfernung rechnerisch berücksichtigt.

**Patentansprüche**

1. Antwortgerät zum Empfang von Abfragesignalen und zur Abstrahlung von Antwortsignalen jeweils nach einer vorgegebenen Zeitspanne nach Empfang eines Abfragesignals, mit einer Antenne (13) und einem Signalpfad, der einen an die Antenne angeschlossenen Empfänger (1), eine steuerbare Verzögerungseinrichtung (2) und einen die Antenne speisenden Sender (3) enthält, mit Mitteln (6, 8, 3, 11, 4, 5) zur Erzeugung einer Reihe von den Antwortsignalen entsprechenden Eichsignalen, welche sich jeweils hinsichtlich des Wertes eines ausgewählten Signalparameters voneinander unterscheiden, mit Mitteln (6, 8, 9) zur Messung der Laufzeit der Eichsignale durch mindestens den Teil des Signalpfads in dem die Laufzeit am stärksten von dem jeweiligen Parameterwert abhängt, mit Mitteln (8, 6, 7) zur Bestimmung der Abweichung der Laufzeit der Eichsignale von der der vorgegebenen Zeitspanne entsprechenden Sollaufzeit sowie zur Ermittlung von von den Abweichungen abhängigen Korrekturwerten für die der Verzögerungseinrichtung zuzuführenden Steuersignale, mit Mitteln zur Speicherung der Korrekturwerte in Abhängigkeit des zugeordneten Wertes des ausgewählten Signalparameters, mit im Empfänger enthaltenen Mitteln zum Erfassen des Wertes des ausgewählten Parameters und mit Mitteln (6, 7, 8) zur Zuführung des einem erfaßten Parameterwert entsprechenden gespeicherten Korrekturwertes an die Verzögerungseinrichtung.

2. Abfragegerät zur Abstrahlung von Abfragesignalen und zum Empfang von Antwortsignalen, das folgende Elemente enthält:

einen Empfänger zum Empfang der Antwortsignale,

Mittel zur Bestimmung der Zeitspanne zwischen der Abstrahlung eines Abfragesignales und dem Empfang eines Antwortsignales unter Berücksichtigung der geräteinternen Laufzeiten,

Mittel zur Erzeugung einer Reihe von den Abfragesignalen entsprechenden Eichsignalen, welche nich jeweils hinsichtlich des Wertes eines ausgewählten Signalparameters voneinander unterscheiden,

Mittel zur Messung der Laufzeit der Eichsignale durch den Empfänger,

Mittel zur Erfassung von Abweichungen der Laufzeiten der Eichsignale von Sollaufzeiten und zur Abspeicherung von von den Abweichungen abhängigen Korrekturwerten in Abhängigkeit von den zugeordneten Parameterwerten,

Mittel im Empfänger, die die Werte von Signalparametern, für die Korrekturwerte abgespeichert sind, erkennen,

und Mittel, die die Korrekturwerte bei der Bestimmung der Zeitspanne zwischen der Abstrahlung eines Abfragesignales und dem Empfang eines Antwortsignales berücksichtigen.

## Revendications

1. Appareil de réponse pour la réception de signaux d'interrogation et pour l'émission de signaux de réponse à chaque fois au bout d'un intervalle de temps prédéterminé après la réception d'un signal d'interrogation, comportant une antenne (13) et une voie de transmission de signaux, qui contient un récepteur (1) relié à l'antenne, un dispositif de retardement (2) pouvant être commandé et un émetteur (3) alimentant l'antenne, des moyens (6, 8, 3, 11, 4, 5) pour produire une série de signaux d'étalonnage correspondant aux signaux de réponse et qui se différencient les uns des autres respectivement en ce qui concerne la valeur d'un paramètre de signal sélectionné, des moyens (6, 8, 9) pour mesurer le temps de transit des signaux d'étalonnage dans au moins la partie de la voie de transmission de signaux dans laquelle le temps de transit dépend le plus fortement de la valeur de paramètre correspondante, des moyens (8, 6, 7) pour la détermination de l'écart du temps de transit des signaux d'étalonnage par rapport à la valeur de consigne du temps de transit correspondant à l'intervalle de temps prédéterminé ainsi que pour obtenir des valeurs de correction, fonction des écarts, pour les signaux de commande à appliquer au dispositif de retardement, des moyens pour la mémorisation des valeurs de correction en fonction de la valeur associée du paramètre de signal sélectionné, des moyens contenus dans le récepteur pour capter la valeur du paramètre sélectionné ainsi que des moyens (6, 7, 8) pour appliquer une valeur de correction mémorisée qui correspond à une valeur de paramètre captée au dispositif de retardement.

2. Appareil d'interrogation pour émettre des signaux d'interrogation et pour recevoir des signaux de réponse, qui contient les éléments suivants:

un récepteur pour recevoir les signaux de réponse,

des moyens pour la détermination de l'intervalle de temps entre l'émission d'un signal d'interrogation et la réception d'un signal de réponse, en tenant compte des temps de transit à l'intérieur des appareils,

des moyens pour produire une série de signaux d'étalonnage correspondant aux signaux d'interrogation, qui se différencient l'un de l'autre respectivement en ce qui concerne la valeur d'un paramètre de signal sélectionné,

des moyens pour mesurer le temps de transit des signaux d'étalonnage dans le récepteur,

des moyens pour capter des écarts entre les temps de transit des signaux d'étalonnage et des temps de transit de consigne et pour mémoriser des valeurs de correction qui sont fonction des écarts et en relation avec les valeurs de paramètres associées,

des moyens prévus dans le récepteur, qui reconnaissant les valeurs de paramètres de signaux qui sont mémorisés pour les valeurs de correction,

et des moyens, qui tiennent compte des valeurs de correction lors de la détermination de l'intervalle de temps entre l'émission d'un signal d'interrogation et la réception d'un signal de réponse.

## Claims

1. Transponder for receiving interrogation signals and for transmitting reply signals after the lapse of a predetermined interval of time following the reception of an interrogation signal, comprising an antenna (13) and a signal path containing a receiver (1) connected to the antenna, a controllable delay device (2), and a transmitter (3) feeding the antenna, means (6, 8, 3, 11, 4, 5) for generating calibration signals corresponding to the reply signals and differing from each other by the value of a selected signal parameter, means (6, 8, 9) for measuring the propagation delay of the calibration signals in at least that portion of the signal path in which the propagation delay is most strongly dependent on the respective parameter value, means (8, 6, 7) for determining the deviation of the propagation delay of the calibration signals from the nominal delay corresponding to the predetermined interval of time and for determining correction values for the control signals to be applied to the delay device which connection values are dependent on said deviations, means for storing the correction values as a function of the associated value of the selected signal parameter, means in the receiver for sensing the value of the selected parameter, and means (6, 7, 8) for feeding the stored correction value corresponding to a sensed parameter value to the delay device.

2. Interrogator for transmitting interrogation signals and receiving replay signals which contains the following elements:

a receiver for receiving the reply signals,

means for determining the interval of time between the transmission of an interrogation signal and the reception of a reply signal, taking into account the built-in equipment delays,

means for generating a series of calibration signals corresponding to the interrogation signals and differing from each other by the value of a selected signal parameter,

means for measuring the propagation delay of the calibration signals in the receiver,

means for determining deviations of the propagation delays of hte calibration signals from nominal delays and for storing correction values dependent on said deviations as a function of the associated parameter values,

means in the receiver which sense the values of signal parameters for which correction values are stored, and

means which take the correction values into account to determining the interval of time between the transmission of an interrogation signal and the reception of a reply signal.